# EUROPÄISCHE PATENTANMELDUNG

(11) **EP 0 522 250 A1**
(43) Veröffentlichungstag der Anmeldung: **13.01.1993**
(21) Anmeldenummer: 92107256.7
(22) Anmeldetag: 29.04.1992
(51) Int. Cl.: C09J 175/16, C08G 18/67, D06M 17/10, C09J 7/04, C08G 18/42, C08G 18/40

(54) **Folienbildender, strahlenhärtbarer und feuchtigkeitshärtender Kaschierklebstoff, Verfahren zum Kaschieren von textilen Bahnen mit diesem Kaschierklebstoff und textiles Material aus textilen Bahnen und Folien des Kaschierklebstoffes**

(30) Priorität: 01.07.1991 DE 4121703
(71) Anmelder: HÜLS AKTIENGESELLSCHAFT, D-45764 Marl (DE)
(72) Erfinder: Paulen, Wilfried, Dr., W-5472 Plaidt (DE); Huber, Hans Friedrich, Dr., W-5204 Lohmar (DE); Losensky, Hans-Willi, Dr., W-5308 Rheinbach-Niederdrees (DE)

(57) **Zusammenfassung**

Für die Herstellung mehrschichtiger textiler Materialien wird ein Aufbau aus einem folienbildenden Kaschierklebstoff und textilen Bahnen, besonders Vliesen, vorgeschlagen.
Dieser Kaschierklebstoff ermöglicht die Kaschierung der textilen Bahn, ist für Dampf durchlässig und für Wasser undurchlässig und bildet nach Strahlenhärtung und Härtung durch Feuchtigkeit das Stützmaterial des textilen Materials. Dieser Kaschierklebstoff wird hergestellt aus Mischungen von Polyestern und Polyethern oder aus Polyetherestern durch vollständigen Umsatz von deren Hydroxylgruppen mit Diisocyanaten und teilweisem Umsatz der freien NCO-Gruppen mit Hydroxyalkylacrylaten und nachfolgender Strahlenhärtung.
Die Herstellung der textilen Materialien erfolgt durch Aufbringen des Kaschierklebstoffs auf eine Release-Schicht, Kaschierung mit einer ersten textilen Bahn, Abzug der Release-Schicht, Strahlenhärtung, thermische Aktivierung und Kaschierung mit der zweiten textilen Bahn auf der anderen Seite.

## Beschreibung

Klimafolien, auch Membranfolien genannt, haben im vermehrten Ausmaß Verwendung gefunden, wobei vor allem auf dem Bekleidungssektor ein stürmisches Wachstum zu verzeichnen war. Es handelt sich hierbei um dünne hydrophile Filme oder flächige Gebilde, wobei "hydrophil" eine hohe Durchlässigkeitsrate gegenüber Wasserdampf, gegenüber flüssigem Wasser jedoch Undurchlässigkeit, bezeichnet. Dies gestattet insbesondere die Herstellung von regenfester Sportbekleidung, die atmungsaktiv ist, d.h. dem Transport der vom menschlichen Körper abgegebenen Feuchtigkeit nach außen gestattet. Die Herstellung solcher Klimafolien wird u.a. in den U.S.-Patenten 3,953.566 und 4,187,390 sowie in EP-A 111 360 und EP-A 311 943 beschrieben. Der wesentliche Unterschied zwischen den beiden ersteren und den beiden letzteren ist der, daß in den U.S.-Patenten ein PTFE-Material beschrieben wird, in welchem durch Recken eine mikroporöse Struktur erzeugt wird, während in den beiden europäischen Patenten ein nicht-poröser Film beschrieben wird, der durch seine Block-Copolymer-Struktur hydrophile Domänen und damit Wasserdampfdurchlässigkeit besitzt.

Solche vorgefertigten hydrophilen Membranfolien werden zur Verarbeitung von Kleidungsstücken mit textilen Materialien mit Hilfe eines Klebstoffs kaschiert. In der Regel erfolgt der Ablauf der Herstellung in folgenden Schritten:
1. Vorfertigung einer Membranfolie und danach
2. Auftrag eines Klebstoffs und
3. Kaschieren mit textilen Bahnen d.h. Vliesen oder Geweben.

In vielen Fällen wird die Klimafolie beidseitig kaschiert, so daß die Schritte 2. und 3. zu wiederholen sind.
Das fertige textile Material besteht dann aus der vorgefertigten, ggf. durch Recken porösen Membranfolie als Stützmaterial, dem Kleber, der Wasser nur dampfförmig durchläßt, und auf einer oder beiden Seiten aus einer aufkaschierten textilen Bahn als Sichtfläche, welche mit Hilfe eines Klebstoffes auf die Membranfolie aufkaschiert ist.
Dieses bekannte fertige textile Material besteht also bei beidseitiger Kaschierung aus fünf Schichten, wobei drei Schichten verschieden sind.
Die Klebstoffschicht kann nach EP-A 0 287 736 aus dem acrylierten Urethan eines Polyethers bestehen, welcher selbst hydrophile Eigenschaften aufweist. Ein solche Beschichtung muß einer schnellen Aushärtung unterliegen, so daß eine Strahlenhärtung verwendet wird.
Gemäß EP-A 0 287 736 wird somit eine sofortige vernetzende Gelbildung erzielt, wodurch das Material nicht mehr genügend thermoplastisch ist. Da jedoch die Strahlenhärtung zu einer hohen Vernetzungsdichte und damit zu hoher Steifigkeit und sogar Sprödigkeit der Beschichtung führt, werden nicht alle Endgruppen der verwendeten Polymeren acryliert, sondern ein Teil über endständige Isocyanatgruppen einer Nachvernetzung durch Luftfeuchtigkeit unterzogen.

Die Herstellung des textilen Materials nach EP-A 0287 736 erfolgt auf einer Kaschierapparatur aus mehreren Rollen, wobei die poröse Bahn aus PTFE mit auf einer Rolle aufgegebener Schmelze des hydrophilen Materials beschickt und die textile Bahn zugeführt, die Materialien durch Rollendruck kaschiert und zuletzt das textile Material bestrahlt wird.

Es bestand daher die Aufgabe, ein solches textiles Material im Aufbau der Schichten zu vereinfachen und das Kaschierverfahren zu dessen Herstellung zu vereinfachen.

Die Lösung dieser Aufgabe besteht zunächst darin, daß die poröse Membranfolie des Stützmaterials und deren Vorfertigung fortfällt.

Dann aber besteht die Aufgabe weiter darin, den Klebstoff für die einseitige oder beidseitige textile Bahn so auszubilden, daß er hydrophil d.h. für Wasser nur als Dampf durchlässig ist und gleichzeitig durch ein Gleichgewicht von Flexibilität und genügender Steifigkeit die Funktion des Stützmaterials übernimmt. Hierzu ist erforderlich, daß dieses Material bei erhöhter Temperatur als Kleber für die textile Bahn, bei Gebrauchstemperatur aber als Stützmaterial des fertigen textilen Materials wirkt und benutzbar ist. Das Material muß also zugleich Kleber und Klimafolie bzw. Stützmaterial sein.
Das erfindungsgemäße Material hat dadurch einen einfachen Aufbau aus zwei Schichten bzw. drei Schichten bei beidseitiger Sichtfläche aus textilen Bahnen.
Erfindungsgemäß wird die Schicht aus Kaschierklebstoff d.h. die spätere Stützschicht in einfacher Weise auf einem danach entfernten Trägermaterial, einer sogenannten Release-Schicht, direkt vor der Kaschierung mit der oder den textilen Bahnen gebildet. Überraschend erhält demnach der Kaschierklebstoff die Eigenschaften der fortgefallenen Stützfolie.

Wir stellten jedoch fest, daß es wenig erfolgreich ist, direkt auf der textilen Bahn oder transferiert von einem Trägermaterial die Kleberschicht aus einem Polymer-Urethan als reaktives Hot melt zu erzeugen und durch Luftfeuchtigkeit zu härten. Zwar ist eine erstarrte Schicht aus einem Holt melt dieser Art durch Wärme reaktivierbar und dann mit textilen Bahnen kaschierbar, aber in Textilien oder dünnen Vliesen erfolgt ein Eindringen zum Teil bis zur Rückseite (sog. Rückvernieten) und dadurch Verblockung des fertigen textilen Materials auf der Rolle. Das in das Vlies eindringende Hot melt muß ersetzt werden, führt zu einem höheren Materialverbrauch und dadurch zu höherer Steifigkeit bzw. zu Störungen des Hot melt-Films und vermindertem Rückhaltevermögen für Wasser.

Es wurden nun von Lösungsmitteln freie, von Reaktivverdünnern freie, thermisch aktivierbare Klebstoffe gefunden, die die genannten Nachteile der Rückvernietung und der Steifigkeit nicht aufweisen, die Eigenschaften eines Stützmaterials in einem kaschierten textilen Material aufweisen. Es ist möglich, dem textilen Material die Eigenschaften einer hydrophilen, Dampf durchlassenden und für Wasser in flüssiger Form undurchlässigen Klimafolie zu vermitteln.
Dann ersetzen diese Kaschierklebstoffe in Kleidungsstücken aus dem genannten mehrschichtigen textilen Material sowohl das Stützmaterial aus der Klimafolie bzw. Membranfolie als auch eine oder beide Kleberschichten unter den textilen Bahnen der Sichtfläche.
Das erfindungsgemäße fertige textile Material ist daher binär d.h. aus der Folien bildenden Schicht aus Kaschierklebstoff und ein- oder beidseitig darauf verbundenen textilen Bahn und somit aus nur zwei verschiedenen Schichten aufgebaut, während das Material nach dem Stand der Technik ein ternäres Material aus drei verschiedenen Schichten in bis zu fünf Lagen ist.
Der Kaschierklebstoff hat einen doppelten Härtungsmechanismus, eine Härtbarkeit durch Strahlen durch vorhandene Acrylatgruppen und eine Härtbarkeit mit Feuchtigkeit durch Isocyanatgruppen. Zwar ist jede der Härtungen bzw. Vernetzung als erste ausführbar, aber im Falle der Kaschierung mit textilen Bahnen erfolgt zuerst die Strahlenhärtung.

Das fertige textile Material kann auch als Babywindel, als medizinisches Pflaster und dgl. verwendet werden.

Die Erfindung betrifft daher einen Folien bildenden, Wasser nur als Dampf durchlassenden Kaschierklebstoff ohne Vorhandensein niedermolekularer Verbindungen wie Lösungsmitteln oder Reaktivverdünnern, welcher durch Strahlenhärtung und Feuchtigkeitshärtung aus Polymeren mit Hydroxylendgruppen, welche mit Isocyanaten und Acrylaten umgesetzt sind, gebildet wird. Die Erfindung betrifft weiter ein Verfahren zum Kaschieren von textilen Materialien mit diesem Textilklebstoff und ein so hergestelltes textiles Material aus textilen Bahnen und Folien des Kaschierklebstoffs, welche in gehärtetem vernetzten Zustand die Eigenschaften einer Klimafolie und einer Stützfolie des textilen Materials vereinen.

Die Komponente A des Kaschierklebstoffes besteht zu 80 bis 100 Gew.-% aus einem Polymer mit Hydroxylendgruppen, welches ein Molekulargewicht Mw von 1000 bis 10.000 aufweist, dessen Hydroxylgruppen an jedem Ende der Moleküle möglichst vollständig durch Isocyanatgruppen ersetzt sind, die teilweise durch Acrylat-Endgruppen ersetzt wurden, wobei das Polymer ein Polyester, ein Polyetherester oder eine Mischung aus Polyester und Polyether sein kann. Möglich sind als Polymer auch Polyesterurethane bzw. ggf. Polyetheresterurethane mit Hydroxyl-Endgruppen, die aus Polyestern bzw. ggf. Polyetherestern durch Umsetzung der Polyester bzw. Polyetherester mit Di- bzw. Triisoyanaten zugängig sind. Dabei wird ein Molverhältnis NCO zu OH kleiner als 1:1 verwendet, wodurch eine begrenzte Anzahl von Polyestermolekülen miteinander durch Urethan-Gruppen verbunden wird, d.h. sozusagen ein Molekulargewichtsaufbau erfolgt, d.h. Polymere mit zwischenstehenden Urethan-Gruppen und endständigen OH-Gruppen entstehen. Diese hierfür verwendete Isocyanatmenge ist folglich nicht auf die nachfolgend genannte Menge Diisocyanat bei der Bildung von Isocyanat-Endgruppen anzurechnen.
Das Polymer ist sehr bevorzugt eine Mischung aus einem Polyester bzw. Polyesterurethan und einem Polyether, wobei Gewichtsverhältnisse von 90 zu 10 bis 40 zu 60, vorzugsweise 80 zu 20 bis 60 zu 40 Polyester bzw. Polyesterurethan zu Polyether vorliegen. Ebenfalls stark bevorzugt sind Polyetherester mit Blöcken aus Polyethern. Die Polymere sollen vorzugsweise linear d.h. solche mit unverzweigter Kette sein oder nur eine begrenzte Menge von Zweigketten aufweisen, wobei die Kettenverzweigung durch höchstens 3 Gew.-%, vorzugsweise höchstens 2 Gew.-%, von trifunktionellen Polyesterbausteinen (wie Trimethylolpropan oder Trimellitsäure) begrenzt ist.
Die linearen Polyester sind Kondensationsprodukte aus Dicarbonsäuren oder deren Säureanhydriden und Diolen, vorzugsweise Alkandiolen, wobei Bestandteile mit mehr als zwei funktionellen Resten bis auf kleine Anteile zu vermeiden sind. Übliche Dicarbonsäuren sind Phthalsäure, Isophthalsäure und Terephthalsäure und aliphatische Dicarbonsäuren mit drei bis etwa 20 C-Atomen wie Adipinsäure, Sebacinsäure, Dodecandisäure sowie die Dimerfettsäuren. Geeignete Diole sind Ethylenglykol, Diethylenglykol, Triethylenglykol und deren höhere Oligomere, Propandiol, Butandiol-1,4, Pentandiol-1,5, Neopentylglykol und Hexandiol-1,6 mit im allgemeinen drei bis höchstens zwanzig C-Atomen.

Die Polyetherester entstehen aus den genannten Polyester-Bausteinen unter Verwendung von Polyethern eines Molekulargewichts von 500 bis 4500.
Die Hydroxylzahl dieser Polymeren, messbar in mg KOH je g, liegt vorzugsweise zwischen 10 und 110, sehr bevorzugt zwischen 15 und 40. Alle Hydroxylendgruppen dieser Polymeren werden mit Diisocyanaten zu Urethangruppen umgesetzt, so daß als neue Endgruppe Isocyanat-Endgruppen auftreten. Das Molverhältnis Diisocyanat zu Polymeren mit zwei Hydroxylgruppen pro Molekül ist 1,2 bis 2,5, vorzugsweise 1,4 bis 2,1. Die anhand der OH-Zahl berechnete Menge des Isocyanats bewirkt in jedem Falle den Verbrauch aller Hydroxyl-Endgruppen, wobei bei einem Molverhältnis 1:2 des Polymeren zu Diisocyanat genau eine Isocyanat-Endgruppe je OH-Gruppe entsteht und im Falle eines Unterschusses des Isocyanats ein gewisser Molekularlaufbau hervorgerufen wird. Geeignete Diisocyanate sind besonders Diphenylmethan-4,4'-diisocyanat, Isophorondiisoyanat, 2,2,4-Trimethylhexamethylendiisocyanat (TMDI) neben Toluylendiisocyanat, 1,6-Hexandiisocyanat, 1,4-Cyclohexylendiisocyanat und weitere aliphatische Diisocyanate oder cycloaliphatische Diisocyanate mit vier bis vierzehn C-Atomen sowie ggf. die entsprechenden Polyisocyanate bzw. präpolymeren Isocyanate.
Diese Isocyanat-Endgruppen werden im Anschluß daran zu einem Teil mit einer Hydroxylgruppen aufweisenden strahlungshärtbaren, ethylenisch ungesättigten Verbindung, insbesondere Hydroxy-alkyl(meth)acrylaten umgesetzt, wobei ein Teil der Isocyanatgruppen durch strahlenhärtbare Acrylatgruppen ersetzt wird. Beide Reaktionen erfolgen bei Temperaturen von etwa 70 bis 150°C. Es werden 10 bis 65 Mol-%, bevorzugt 15 bis 62 Mol-% der Isocyanatgruppen durch Acrylatgruppen ersetzt.
Geeignete ungesättigte Verbindungen sind insbesondere die Hydroxyalkylacrylate bzw. -methacrylate mit 2 bis 8 Kohlenstoffatomen der Alkylgruppe, besonders Hydroxyethylacrylat, 2-Hydroxy-ethyl-methacrylat und Butandiol-monoacrylat.
Möglich ist es auch, die Hydroxylgruppen des Polymers zuerst mit Isocyanat-Gruppen enthaltenden Acrylaten bzw. Methacrylaten im Anteil der genannten 10 bis 65 Mol-%, umzusetzen und darauf die restlichen OH-Gruppen mit Diisocyanat umzusetzen. Geeignet sind hierzu Isocyanato alkyl (meth)acrylat. Die noch verbliebenen OH-Gruppen werden anschließend vollständig durch Umsetzung mit Diisocyanaten bzw. Tri- oder Polyisocyanaten in Isocyanatgruppen umgesetzt.
Der Klebstoffmischung können 0,6 bis 5 Gew.-% eines Photoinitiators zugegeben werden, soweit die Härtung mit UV-Strahlen erfolgen soll. Geeignete Photoinitiatoren sind Alkylbenzoinether mit 1 bis 6 C-Atomen in der Alkylgruppe, Dialkyloxyacetophenone und 2-Hydroxy-2,2- substituierte Acetophenone.
Klebstoffhilfsmittel in Mengen von 0 bis 15 Gew.-% sind beispielsweise Adhäsionsverbesserer, Tackifier, Lichtstabilisatoren, Katalysatoren und Antioxidantien.
Im Falle der Strahlenhärtung mit Elektronenstrahlhärtungsanlagen werden Strahlungsdosen von 20 bis 80 KGray, im Falle von UV-Lampen Anlagen mit Lampenleistungen von 80 bis 150 W/cm verwendet.
Der Umsetzungsgrad der feuchtigkeitshärtenden Isocyanatgruppen mit den strahlenhärtbaren Acrylatgruppen bewirkt, daß der Haftklebstoff in flüssiger Form nach Aufschmelzen auf eine Release-Unterlage, beispielsweise eine umlaufende Silikonfolie, aufgebracht werden kann, und durch Bestrahlung lediglich eine Kettenverlängerung und damit eine Erhöhung der Schmelzviskosität erfährt, wobei thermoplastische Eigenschaften erhalten bleiben müssen und insbesondere eine thermische Aktivierung ein oder mehrmals mittels z.B. geheizter Rollen oder Wärmestrahler möglich ist, welche die Kaschierung mit textilen Bahnen ermöglicht. Erst beim Lagern z.B. auf der Rolle erfolgt die Vernetzung der Isocyanatgruppen mittels Feuchtigkeit, wodurch die hydrophilen Filme der Klimafolie, hergestellt aus wärmeaktivierbaren Schmelzklebern, auch die Eigenschaft eines Stützmaterials der fertigen textilen Materialien erhält. Die Sichtfläche aus textilen Bahnen kann insbesondere aus Vliesen oder ggf. Geweben ein- oder bevorzugt beidseitig aufkaschiert werden.

Das Herstellverfahren der textilen fertigen Materialien kann in mehreren Fertigungsschritten ohne Vorfertigung einer Stützbahn oder eines porösen Materials auf einer Kaschierapparatur aus mehreren Rollen z.B. einem Walzenauftragswerk mit Kaschieranlage (roll coater and laminator) erfolgen, wobei auf eine bandförmige Release-Schicht aus z.B. Silikonpapier, der erfindungsgemäße Schmelzklebstoff in geschmolzenem Zustand beispielsweise mit einer Schlitzdüse aufgebracht wird oder über eine Rolle aufgetragen wird. Sodann wird eine der beiden textilen Bahnen lediglich durch Andrücken mit der Klebstoffschicht verbunden und das so entstandene Laminat von der Release-Bahn getrennt. Als nächster Schritt wird die nun freiliegende Klebstoffschicht mit UV- oder Elektronenstrahlen bestrahlt und unmittelbar darauf nach Thermoaktivierung durch Andrücken mit einer Rolle mit der zweiten textilen Bahn durch Kaschieren verbunden.

Dieses Herstellverfahren weicht somit erheblich und in überraschender Weise von den bekannten Kaschierverfahren textiler Materialien ab.
Die Kaschierung erfolgt bei Temperaturen von ab 40 bis 120°C. Die Aktivierung der durch Strahlen bereits gehärteten, aber noch nicht durch Feuchtigkeit endgültig vernetzten Bahn erfolgt bei Temperaturen von 80 bis 150, besonders 95 bis 145°C.

### Beispiele

### Umsetzung mit Diisocyanat:

Die Hydroxylpolyester bzw. Hydroxylpolyetherester gemäß der nachfolgenden Beispiele werden bei 100 bis 140°C unter Rühren bei einem Druck unter 2 Torr aufgeschmolzen. Der Zusatz von Diisocyanat erfolgt in CO₂-Atmosphäre bei dieser Temperatur in 30 bis 60 Minuten Reaktionszeit. 0,05 bis 0,1 Gew.-% Stabilisator (z.B. Irganox 1010, 1035 oder 1076) werden zugefügt.
Das Produkt, dessen OH-Gruppen durch NCO-Gruppen ersetzt sind, wird abgefüllt oder, wie nachfolgend beschrieben, mit Acrylat umgesetzt.

### Umsetzung mit Hydroxy-alkylacrylat:

Bei 100 bis 140°C wird Hydroxy-ethylacrylat in der Menge nach Tab. 2 zugegeben, die dem gewollten Umsetzungsgrad der Isocyanatgruppen entspricht. Nach 30 bis 60 Minuten Reaktionszeit unter CO₂-Atmosphäre ist die Reaktion beendet.
Im Falle der beabsichtigten Härtung durch UV-Strahlen wird einer der genannten Photoinitiatoren in Mengen 1,5 bis 5,0 Gew.-% zugegeben.

### Kaschierung und Herstellung des kaschierten textilen Materials:

Der Schmelzklebstoff wird bei einer Temperatur von 140°C in einer Schichtdicke von 30 µm über eine Schlitzdüse auf ein Silikonpapier-Band in einer Meltex-Anlage des Typs CL 170 mit Rollenführung für Silikonpapier und Vliesbahn (Basis Polypropylen) sowie Druckrollen für die Kaschierung aufgetragen. Eine Vliesbahn (Dicke 25 µm) wird über Rollen zugeführt und bei 75°C durch Walzendruck kaschiert. Danach wird das Silikonpapier entfernt. Die Schicht des Schmelzklebstoffs wird mittels UV-Strahlung (Hg-Mitteldruckstrahler der IST, Nürtingen) mit 120 W/cm bei einer Bahngeschwindigkeit von 10 m/min. oder mittels Elektronenstrahlung (Fa. ESI, Genf) mit einer Dosis von 40 bis 80 KGray gehärtet.
Durch Wärmestrahlung wird die freiliegende Seite des Klebstoffs aktiviert, und ein zulaufendes gleiches Vliesmaterial wird auf der Seite der noch freien Klebstoffschicht auf gleiche Weise bei 95°C kaschiert. Dieser Verbund aus der Klebstoffschicht mit beidseitig aufgebrachter Vliesschicht wird in Rollen gelagert.

### Messungen und Bewertungen:

Sofern die Thermoaktivierbarkeit des strahlengehärteten Materials nicht ausreicht, ergibt sich eine ungenügende Benetzung des Vlieses und eine nicht haftfeste Kaschierung.
Das Wasserrückhaltevermögen wird mit einem Glasrohr von 40 mm Durchmesser gemessen, das mit dem textilen Verbundmaterial einseitig verschlossen wird. Das Rohr wird senkrecht aufgehängt und mit destilliertem Wasser bis zu einer Höhe von 30 cm gefüllt.
Das Material ist ausreichend undurchlässig für Wasser, wenn es einer Wassersäule von 30 oder mehr cm 24 Stunden ohne Filmriß widersteht.
Der fertige Verbund härtet auf dem Lager durch Feuchtigkeitsvernetzung der Isocyanat-Gruppen und hat danach ein wesentlich höheres Rückhaltevermögen für Wasser.

### Beispiele 1 bis 8

Für die Beispiele 1 bis 6 wurden die Polyester A₁ und A₂ im Molverhältnis A₁ : A₂ von 3:2 mit MDI (Diphenylmethan-4,4'-diisocyanat) umgesetzt. Die Hydroxylzahl des Polyesters A₁ betrug 20, die von A₂ 21, die von A₃ 18 mg KOH/g (nach DNV 1223).

Die Polyester haben folgende Zusammensetzung in Mol-%:

**Tabelle 1**

| | **Dicarbonsäuren** | | | | **Diole** | | | |
|---|---|---|---|---|---|---|---|---|
| | AD | IPS | PS | TPS | MEG | NPG | PEG 3000 | HD |
| A₁ | 50 | 25 | 25 | - | 48.7 | 48.6 | 2.7 | - |
| A₂ | - | 67 | - | 33 | 35 | 30 | - | 35 |
| AD = Adipinsäure PS = Phthalsäure IPS = Isophthalsäure TPS = Terephthalsäure MEG = Monoethylenglykol NPG = Neopentylglykol PEG = Polyethylenglykol des Mw 3000 bzw. 1500 HD = Hexandiol | | | | | | | | |

Die Schmelzklebstoffe weisen folgende Zusammensetzung und Eigenschaften auf:

**Tabelle 2**

| Nr. | OH/NCO-Verhältnis * | NCO/2-HEA Verhältnis ** | Thermische Aktivierbarkeit | Wasserrückhaltevermögen |
|---|---|---|---|---|
| 1 | 1:2.0 | - | gut | Filmriß |
| 2 | 1:2.5 | - | mäßig *** | Filmriß |
| 3 | 1:2.0 | 0.8 :0.2 | gut | gut |
| 4 | 1:2.0 | 0.75:0.25 | gut | sehr gut |
| 5 | 1:2.0 | 0.7 :0.3 | noch gut | gut |
| 6 | 1:2.0 | 0.25:0.75 | mangelhafte Benetzung | Filmriß |

| | | | | |
|---|---|---|---|---|
| * Mol-Verhältnis der Dosierung | | | | |
| ** Mole im Produkt | | | | |
| *** Klebstoff dringt ins Vlies ein | | | | |

### Beispiel 7

Entsprechend den Beispielen 1 bis 6 wurde ein Polyetherester A₃ mit dem Molverhältnis 50 AD, 25 IPS, 25 PS, 47 MEG, 47 NPG und 6,0 PEG 1500 hergestellt und einerseits mit MDI und andererseits mit Toluylendisocyanat umgesetzt. (Molverhältnis OH/NCO 1:2,0). Darauf wurde die Umsetzung mit den in den Beispielen 3 bis 5 genannten Mengen 2-HEA (2-Hydroxyethylacrylat) bzw. dem entsprechenden Methacrylat vorgenommen. Die Ergebnisse entsprechen der 2. Tabelle.

### Beispiel 8

Ein Polyester entsprechend dem Beispiel 7 mit den gleichen Diolen, jedoch mit 40% Sebacinsäure und jeweils 30% IPS und Phthalsäure wurde mit MDI im Molverhältnis 1:2,1 und darauf mit 2-HEA in der Menge der Beispiele 3 bis 5 umgesetzt. Die Umsetzung mit 2-HEA im Molverhältnis der Beispiele 3 bis 5 ergab entsprechende Ergebnisse.

### Beispiel 9

Ein Polyester aus 50 TPS, 40 IPS und 10 AD sowie 50 MEG, 25 NPG und 25 Hydroxypivalinsäure-neopentylglykolester wird mit Polyethylenglykol (Mw 4000) im Gewichtsverhältnis 2 zu 3 (Polyester zu Polyethylenglykol) gemischt OH Zahl 37) und mit MDI im OH/NCO-Mol-Verhältnis 1:2,0 und danach mit Hydroxyethylacrylat im Molverhältnis von 60 Mol% der NCO-Gruppen umgesetzt.

Die Wasserdampfdurchlässigkeit eines textilen Materials mit beidseitig aufkaschiertem Vlies (25 µm) und einer Schicht gemäß Beispiel 9 bzw. den Beispielen 3 bis 5 wird nach Strahlenhärtung und zehntägiger Lagerung bei 60% relativer Feuchte nach DIN 5325 geprüft und ergibt mit 100 bis 200 g je 24 Std. und m² gute Werte. Die Aktivierbarkeit war einwandfrei und das Wasserrückhaltevermögen sehr gut.

## Patentansprüche

1. Folienbildender, strahlenhärtbarer und feuchtigkeitshärtender Kaschierklebstoff, frei von Gehalten reaktiver Verdünnungsmittel, dadurch gekennzeichnet, daß die Klebstoffmischung aus
A) 80 bis 100 Gew.-% mindestens eines Polymeren mit Hydroxylendgruppen, dessen Hydroxyl-Endgruppen vollständig umgesetzt sind und zu 35 bis 90 Mol-% durch Isocyanatgruppen und zu 10 bis 65 Mol-% durch Acrylat bzw. Methacrylat gruppen ersetzt sind,
B) gegebenenfalls 0,6 bis 5 Gew.-% eines Photoinitiators und
C) 0 bis 15 Gew.-% üblichen Klebstoffhilfmitteln besteht,
worin die Komponente A hergestellt ist aus einem Hydroxyl-Endgruppen enthaltenden Polyester bzw. Polyesterurethan oder Polyetherester oder Mischungen aus Polyester bzw. Polyesterurethan und Polyether mit Molekulargewichten von 1000 bis 10.000 und Hydroxylzahlen von 10 bis 110, deren Hydroxylgruppen vollständig mit Diisocyanaten im Molverhältnis von 1,2 bis 2,5 Mol Diisocyanat je Summe der Mole von Polyester bzw. Polyesterurethane, Polyetherester oder der Mischung aus Polyester und Polyether und die Isocyanat-Endgruppen zu 10 bis 65 Mol-% mit Hydroxyalkyl(meth)acrylat umgesetzt sind.

2. Folienbildender Kaschierklebstoff nach Anspruch 1 zur Herstellung von binärem textilen Material mit Durchlässigkeit für Wasserdampf und Undurchlässigkeit für flüssiges Wasser aus der Schicht des Kaschierklebstoffs und ein- oder beidseitig damit verbundener textiler Bahn.

3. Kaschierklebstoff nach Anspruch 1 oder 2, dadurch gekennzeichnet, daß Isocyanatgruppen und Acrylatgruppen enthaltende Polymere aus einer Mischung eines Polyesters bzw. Polyesterurethans und eines Polyethers in Anteilen von 90 zu 10 bis 40 zu 60 Gew.-% Polyester zu Polyether, oder einem Polyester bzw. Polyesterurethan mit enthaltenem Block eines Polyethers in den genannten Anteilen besteht.

4. Kaschierklebstoff nach Anspruch 1 oder 2, dadurch gekennzeichnet, daß die Hydroxylgruppen enthaltenden Polyester bzw. Polyesterurethane, Polyetherester oder Mischungen aus Polyester bzw. Polyesterurethan und Polyether je Mol mit 1,4 bis 2,1 Mol Diisocyanat umgesetzt sind.

5. Verfahren zur Herstellung textiler Materialien durch Kaschierung einer Dampf durchlassenden und Wasser zurückhaltenden Schicht mit textilen Bahnen auf mindestens einer Seite durch die Fertigungsschritte
a) Aufbringen der aufgeschmolzenen Schicht des Kaschierklebstoffs nach einem der Ansprüche 1 bis 4 auf eine bandförmige Release-Schicht
b) Zulaufen einer textilen Bahn auf einer Seite und Kaschierung durch Druck
c) Entfernung der Release-Schicht
d) Bestrahlung der freiliegenden Kleberschicht mittels UV-Strahlung oder Elektronenstrahlung
e) Aktivierung durch Wärme und Kaschierung der Gegenseite mit einer textilen Bahn,
wobei die Härtung durch Elektronenstrahlen auch vor Entfernung der Release-Schicht erfolgen kann.

6. Verfahren nach Anspruch 5, gekennzeichnet durch die Herstellung auf rotierenden Walzensystemen, wobei der Schmelzkleber durch Auftrag mittels einer Schlitzdüse oder einer ggf. geheizten Walze auf eine umlaufende Release-Schicht aufgebracht, eine erste textile Bahn aufkaschiert und nach Trennen von der Release-Schicht die Kleberschicht bestrahlt und dann durch Wärme aktiviert wird und die Kaschierung auf eine zweite textile Bahn durch Walzendruck erfolgt.

7. Textiles Material mit Durchlässigkeit für Dampf und Undurchlässigkeit für Wasser, bestehend aus einer Schicht aus strahlenvernetzten Acrylgruppen bzw. Meth-acrylgruppen und feuchtigkeitsvernetzte Isocyanatgruppen tragenden Polymeren, entstanden aus dem Kaschierklebstoff nach einem der Ansprüche 1 bis 4, und ein- oder beidseitig darauf kaschierten textilen Bahnen.
